Europäisches Patentamt

European Patent Office

Office européen des brevets

(19)

(11) Numéro de publication : **0 119 930**
**B1**

(12) # FASCICULE DE BREVET EUROPÉEN

(45) Date de publication du fascicule du brevet :
03.12.86

(51) Int. Cl.⁴ : **G 21 C 17/12**

(21) Numéro de dépôt : **84400538.9**

(22) Date de dépôt : **16.03.84**

(54) Dispositif de repérage de position des barres de contrôle d'un réacteur nucléaire.

(30) Priorité : 18.03.83 FR 8304464

(43) Date de publication de la demande :
26.09.84 Bulletin 84/39

(45) Mention de la délivrance du brevet :
03.12.86 Bulletin 86/49

(84) Etats contractants désignés :
BE DE GB IT

(56) Documents cités :
EP-A- 0 057 648
FR-A- 2 135 340
FR-A- 2 204 015
FR-A- 2 287 750
FR-A- 2 423 034
GB-A- 2 017 300

(73) Titulaire : **Framatome**
**Tour Fiat 1 place de la Coupole**
**F-92400 Courbevoie (FR)**

(72) Inventeur : **Gravelle, Alain**
**39 rue Amédée Usseglio**
**F-92350 Le Plessis Robinson (FR)**

(74) Mandataire : **Lavoix, Jean et al**
**c/o Cabinet Lavoix 2, Place D'Estienne D'Orves**
**F-75441 Paris Cedex 09 (FR)**

## Description

L'invention a pour objet un dispositif de repérage de la position d'une barre de contrôle d'un réacteur nucléaire.

Dans les réacteurs nucléaires, notamment du type à eau sous pression, on utilise des barres de contrôle suspendues à des tiges guidées verticalement dans des tubes guides fixés à leur extrémité inférieure sur des tubes adaptateurs qui traversent le couvercle du réacteur et fermés à leur partie supérieure de façon à maintenir l'intégrité de l'enceinte sous pression. Chaque tube est associé à des mécanismes permettant de déplacer verticalement la tige pour soulever ou abaisser la barre de contrôle correspondante.

Il est nécessaire de repérer en permanence la position de chaque barre de contrôle et par conséquent de la tige de suspension et l'on utilise à cet effet des dispositifs variés. Ces dispositifs doivent évidemment fonctionner sans contact à travers la paroi du tube adaptateur et on a déjà proposé d'utiliser à cet effet des signaux ultrasonores.

On peut par exemple placer à la partie supérieure du tube adaptateur un émetteur-récepteur de signaux ultra-sonores qui envoie un faisceau dans une direction verticale en direction de l'extrémité supérieure de la tige de suspension et capte le faisceau réfléchi, la mesure du temps de propagation donnant une indication sur la hauteur de la tige.

Du fait que la vitesse de propagation de l'onde ultra-sonore varie en fonction de la température, une telle méthode n'est valable qu'à une température constante à moins d'introduire dans la mesure une correction en fonction de la température. Il en résulte des possibilités d'erreurs.

Dans un autre dispositif connu qui fait l'objet de la demande de brevet EP-A-0 057 648, on remplace la mesure directe de la position de la tige par un comptage du nombre de pas de déplacement de la tige dans un sens ou dans l'autre.

En effet, les mécanismes de commande du déplacement de la tige de suspension agissent normalement pas à pas et, en comptant le nombre de pas de déplacement vers le haut ou vers le bas, on peut en déduire, connaissant la hauteur du pas, une indication sur la position de la tige et par conséquent de la barre de contrôle.

Le dispositif décrit dans la demande de brevet cité applique ce procédé à des mécanismes de déplacement à cliquet. Dans les dispositifs de ce genre, en effet, chaque tige de suspension est munie, sur sa paroi latérale, de cannelures s'étendant sur une hauteur correspondant à la hauteur de déplacement de la barre de contrôle. Sur le tube adaptateur correspondant, on place des mécanismes comportant des cliquets qui s'engagent sur les cannelures de la tige et qui permettent de la soulever ou de l'abaisser et de la maintenir en position. La tige se soulève donc, ou s'abaisse, par une succession de déplacements correspondant chacun à la hauteur d'un cran et après chacun desquels elle marque un temps d'arrêt. Dans le dispositif qui fait l'objet de la demande de brevet précédente, on repère les temps d'arrêt en mesurant la vitesse de déplacement de la tige et l'on compte ainsi le nombre de déplacements de la tige dans un sens ou dans l'autre.

Un tel dispositif ne peut donc être utilisé lorsque le déplacement s'effectue de façon continue, c'est-à-dire sans temps d'arrêt périodique. Or c'est précisément le cas dans d'autres dispositifs qui utilisent des mécanismes à vis-écrou.

Dans ce cas, en effet, la tige est munie sur sa paroi latérale d'une partie filetée qui s'engage dans un alésage fileté correspondant, ménagé sur un rotor formant écrou qui entoure la tige et est monté rotatif à l'intérieur du tube guide autour de l'axe vertical de celui-ci, le mouvement de rotation de l'écrou dans un sens ou dans l'autre étant commandé par un mécanisme ou une bobine magnétique, monté sur le tube guide.

L'invention a pour objet un nouveau dispositif de repérage adapté à un système de déplacement par vis-écrou et permettant de repérer la position de la tige en comptant le nombre de pas de déplacements effectué vers le haut ou vers le bas.

Le dispositif de repérage selon l'invention comprend un dispositif émetteur récepteur d'un faisceau d'ondes ultra-sonores dans une direction horizontale coupant l'axe de la tige, une surface cylindrique de réflexion des ondes, ménagée sur la paroi latérale du rotor et ayant en section droite un profil en forme de came comprenant, sur un secteur angulaire de faible ouverture, au moins une partie formant rampe dont la distance à l'axe varie rapidement entre un minimum et un maximum, un moyen de formation d'impulsions correspondant chacune au passage de la rampe devant le faisceau d'ondes ultra-sonores au cours de la rotation du rotor et des moyens d'enregistrement et de comptage des impulsions se succédant dans l'un ou l'autre sens de rotation du rotor.

De préférence, la distance à l'axe de la surface de réflexion dans le plan radial du faisceau varie linéairement en fonction de l'angle de rotation autour de l'axe entre un minimum et un maximum, d'une part dans le secteur angulaire correspondant à la rampe et d'autre part sur le reste du profil de la came.

Dans un mode de réalisation particulier, le moyen de formation des impulsions comprend un dispositif de mesure de la durée de propagation des ondes ultra-sonores entre l'émission et la réception de l'écho réfléchi sur le rotor, un dispositif de formation d'un signal par dérivation de la durée de propagation en fonction du temps, un dispositif de comparaison du signal dérivé avec deux seuils positifs et avec deux seuils négatifs pour l'élimination dans chaque sens, respectivement, du bruit de fond et des parasites, un moyen de comptage des signaux successifs compris entre deux seuils de même signe et un moyen de formation d'une impulsion positive ou d'une impulsion négative chaque fois que le nombre de signaux successifs de même signe dépasse un nombre donné.

L'invention sera mieux comprise par la description qui va suivre d'un mode de réalisation particulier, donné à titre d'exemple et représenté sur les dessins annexés.

Sur la figure 1, on a représenté schématiquement un mécanisme de commande d'une barre de contrôle associé au dispositif de repérage selon l'invention.

La figure 2 représente à échelle agrandie, en coupe axiale, la partie du rotor associée à l'émetteur-récepteur d'ultra-sons.

La figure 3 est une vue de dessus selon III-III de la figure 2.

La figure 4 est un diagramme représentant la variation de la durée de propagation du son en fonction du temps, à gauche pour une rotation en sens positif et à droite pour une rotation en sens négatif.

La figure 5 est un diagramme représentant la dérivée par rapport au temps de la durée de propagation pour une rotation en sens positif ou en sens négatif.

La figure 6 est une vue de détail à échelle agrandie représentant un mode de réalisation plus perfectionné.

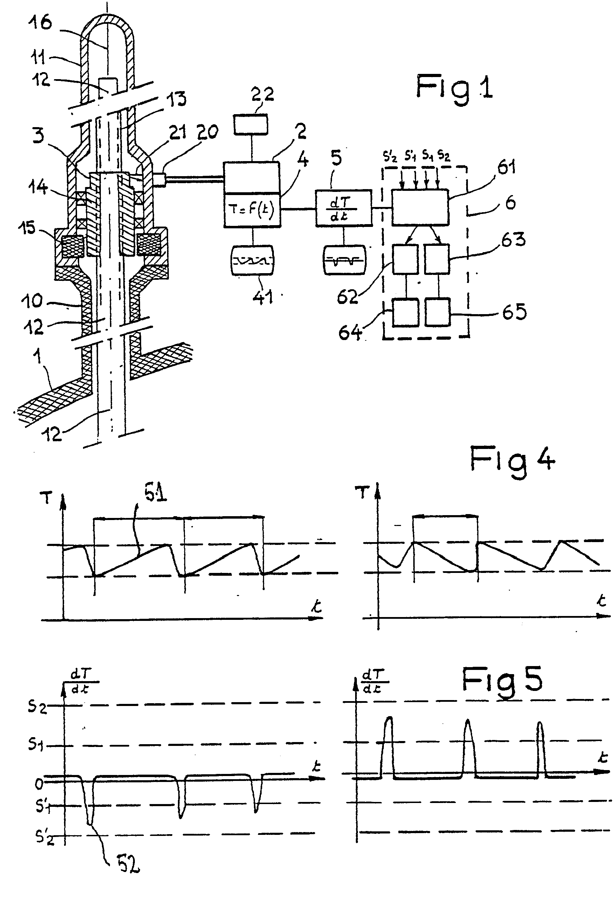

Sur la figure 1, on a représenté schématiquement le couvercle de la cuve 1 d'un réacteur nucléaire traversé par un tube adaptateur 10 sur lequel est fixé un tube guide 11 fermé à sa partie supérieure. La barre de contrôle, non représentée, est suspendue à une tige 12 qui coulisse verticalement à l'intérieur du tube adaptateur 10 et du tube guide 11.

La partie supérieure de la tige de suspension 12 est munie, sur une hauteur supérieure au déplacement vertical de la barre de contrôle, d'un filetage 13 sur lequel s'engage un alésage fileté intérieurement ménagé sur un rotor 14 formant écrou. Le rotor 14 est monté rotatif à l'intérieur du tube guide 11 autour de l'axe de celui-ci et est entraîné en rotation par un mécanisme ou une bobine électromagnétique 15 qui coopère avec une partie correspondante ménagée sur le rotor 14. Ce dernier est bloqué verticalement par rapport au tube guide 11 alors que la tige filetée 12 est bloquée en rotation et peut se déplacer verticalement. Il en résulte que chaque rotation d'un tour du rotor dans un sens ou dans l'autre commande le déplacement de la tige vers le haut ou vers le bas sur une hauteur correspondant au pas du filetage. Par conséquent, en comptant le nombre de tours fait par le rotor vers la droite ou vers la gauche on peut mesurer le déplacement de la tige de suspension vers le haut ou vers le bas.

A cet effet, selon l'invention, on utilise un dispositif émetteur récepteur 2 qui, comme on l'a représenté sur les figures 2 et 3, émet un faisceau d'ondes ultra-sonores dans une direction horizontale coupant l'axe 16 du tube guide et de la tige de suspension. Ce faisceau 21 rencontre une surface cylindrique 3 ménagée sur la paroi latérale du rotor 14. Les génératrices de la surface cylindrique 3 sont parallèles à l'axe 16 et leur distance à l'axe varie rapidement sur un secteur angulaire A d'assez faible ouverture et lentement sur le secteur angulaire complémentaire B. De la sorte, la surface cylindrique 3 constitue une came comprenant une partie 31 formant une rampe correspondant au secteur angulaire A.

Le dispositif émetteur-récepteur 2 est associé à un capteur 20 fixé sur la paroi du tube guide 11 et qui envoie le faisceau d'ondes ultra-sonores 21 dans la direction de l'axe 16 et reçoit l'écho réfléchi par la surface cylindrique 3. La fréquence d'émission des signaux ultra-sonores est réglée par un sélecteur de fréquence 22. On utilise des capteurs à haute fréquence, par exemple supérieure à 5 MHz présentant de très bonnes caractéristiques d'amortissement, pour obtenir une bonne résolution.

La durée de propagation de chaque onde, c'est-à-dire le temps qui s'écoule entre l'émission et la réception est mesuré par un dispositif 4 qui fournit donc un signal ondulé représentatif de la variation de la durée de propagation T en fonction du temps réel t et qui est représenté sur les diagrammes de la figure 4, à droite de la figure pour une rotation dans le sens positif, de droite à gauche et à gauche, de la figure pour une rotation dans le sens négatif, de gauche à droite.

Ce diagramme peut éventuellement être représenté sur un écran vidéo 41 associé au dispositif 4.

Chaque fois qu'une onde ultra-sonore est émise par le dispositif 2 et le capteur 20, le dispositif 4 émet un signal analogique $T = f(t)$ auquel on fait correspondre un signal dérivé $dT/dt$ représentatif de la vitesse de variation de la durée de propagation et qui est élaboré par un dispositif de dérivation 5. Le dispositif 5 peut être par exemple relié à un calculateur et calculer la dérivée par soustractions successives des amplitudes.

Le dispositif de dérivation 5 émet donc à intervalles réguliers des signaux dérivés dont la variation en fonction du temps est représenté sur les diagrammes de la figure 5, à droite pour une rotation dans le sens positif et à gauche dans le sens négatif.

Le profil de la came constituée par la surface cylindrique 3 du rotor est réalisé de telle sorte que la distance des génératrices à l'axe varie linéairement en fonction de l'angle de rotation. Pour une rotation à vitesse constante, le signal dérivé comprend donc un palier 51 correspondant à la vitesse de variation de la distance par rapport à l'axe et un pic 52 correspondant au passage de la rampe 31 devant le capteur 20, qui se traduit par une variation brusque du temps de propagation et par conséquent du signal dérivé. Celui-ci est représenté sur les diagrammes de la figure 5, à gauche pour une rotation dans le sens négatif et à droite dans le sens positif. A chaque passage de la rampe 31 devant le faisceau ultra-sons 21 correspond un pic 52 qui, compte tenu de la forme donné à la came 3, est positif pour une rotation dans le sens positif et négatif pour une rotation dans le sens négatif. En comptant le nombre de pics 52 formés pendant le déplacement de la tige, on compte donc le nombre de tours du rotor et par conséquent le nombre de pas de filets dont s'est élevée ou abaissée la tige. Connaissant ce pas, on peut donc en déduire l'amplitude des déplacements de la barre de contrôle.

Pour compter le nombre d'impulsions correspondant aux pics 52, on utilise un dispositif 6 représenté sur la figure 1. Celui-ci comprend essentiellement un dispositif de comparaison 61 qui reçoit les signaux dérivés émis par le dispositif de dérivation 5 et les compare à deux seuils positifs, respectivement inférieur S1 et supérieur S2 et à deux seuils négatifs, respectivement inférieur S'1 et supérieur S'2. Les niveaux des seuils inférieurs, positif S1 et négatif S'1, correspondent à l'amplitude possible du bruit de fond. Les niveaux des seuils supérieurs, positif S2 et négatif S'2, correspondent à l'amplitude maximale, dans le sens positif ou négatif des signaux dérivés produits par la rotation de la came et peuvent être réglés de façon adéquate en fonction de la vitesse de rotation du rotor et de l'inclinaison de la rampe 31. Les signaux d'amplitude supérieure à ce niveau correspondent donc à des parasites. Par ailleurs, les seuils inférieurs S1 et S'1 ont une amplitude supérieure à celle du signal dérivé correspondant à la partie 32 de la came 3. De la sorte, on est sûr que les signaux dérivés dont l'amplitude est comprise entre les seuils S1 et S2 ou S'1 et S'2 correspondent au passage de la rampe 31 devant le capteur 20. Ces signaux, après comparaison dans le dispositif 61, sont totalisés dans deux compteurs 62, 63 correspondant l'un aux signaux positifs et l'autre aux signaux négatifs. Par conséquent, selon le sens de rotation du rotor, c'est, à chaque tour, l'un ou l'autre des compteurs 62, 63 qui reçoit et totalise les signaux.

La largeur du pic 52 correspond à la durée de passage de la rampe 31 devant le capteur 20 et est donc fonction de la vitesse de rotation du rotor et de l'amplitude du secteur angulaire A. On peut cependant définir, en fonction de la fréquence d'émission des ondes, un nombre minimum de signaux réfléchis qui doivent être reçus par le capteur à chaque passage de la came. Ce nombre minimum est gardé en mémoire par les compteurs 62, 63 et chacun de ceux-ci envoie une impulsion dans un totalisateur 64 ou 65 chaque fois que le nombre minimum de signaux correspondant à un pic est dépassé. Les compteurs 62 et 63 sont remis à zéro à des intervalles réguliers dont l'espacement correspond à un tour du rotor de telle sorte que chaque compteur ne puisse prendre en compte que les signaux correspondants à un même pic c'est-à-dire au passage de la rampe.

Ainsi, les deux totalisateurs 64 et 65 permettent de connaître le nombre de tours effectué par le rotor dans un sens de rotation ou dans l'autre et par conséquent d'en déduire l'amplitude des déplacements relatifs des barres de contrôle vers le haut ou vers le bas, ce qui permet de repérer leur position en partant d'une position de départ connue.

Bien entendu, le dispositif qui vient d'être décrit en détails n'a été donné qu'à titre d'exemple, d'autres moyens de comptage du nombre de tours du rotor pouvant être envisagés. D'autre part, les dispositions décrites pourraient faire l'objet de variantes, sans sortir du cadre des revendications.

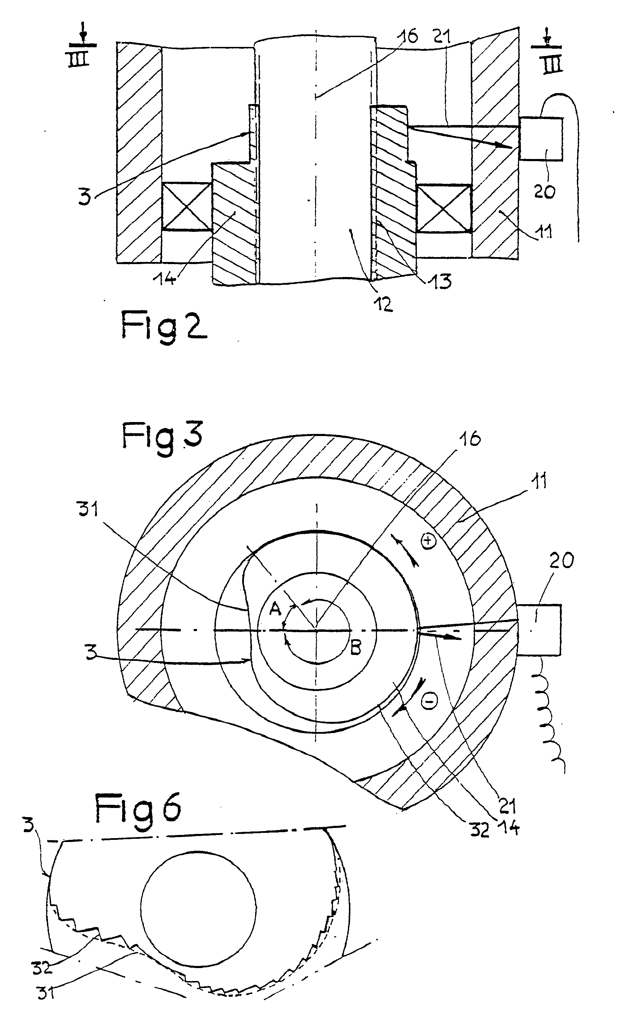

C'est ainsi que le profil de la came 3 pourrait être perfectionné de la façon représentée sur la figure 6.

Dans ce cas, la rampe 31 est constituée par une série de marches 32 présentant chacune une face plane dont la normale passe sensiblement par l'axe 16 de la tige 12 de façon que chaque face 32 soit à peu près perpendiculaire au faisceau d'ondes ultra-sonores 21 au moment de son passage devant celui-ci. De la sorte, la réflexion des ondes s'effectue dans de meilleures conditions. Un traitement par filtre permet de niveler la courbe réponse.

**Revendications**

1. Dispositif de repérage de la position d'une barre de contrôle d'un réacteur nucléaire dans lequel chaque barre de contrôle est suspendue à une tige (12) montée coulissante verticalement à l'intérieur d'un tube adaptateur (10, 11) sur lequel est monté un mécanisme à vis-écrou, de commande du déplacement de la tige (12) comprenant un rotor (14) formant écrou monté rotatif autour de l'axe vertical du tube (10) et muni d'un alésage fileté dans lequel s'engage une partie filetée correspondante (13) de la tige (12), et un moyen (15) d'entraînement en rotation du rotor (14) dans un sens ou l'autre, l'écrou (14) étant bloqué en déplacement vertical et la tige (12) étant bloquée en rotation, caractérisé par le fait qu'il comprend un dispositif (2, 20) émetteur-récepteur d'un faisceau d'ondes ultra-sonores (21) dans une direction horizontale coupant l'axe (16) de la tige (12), une surface cylindrique (3) de réflexion des ondes ménagées sur la paroi latérale du rotor et ayant, en section droite, un profil en forme de came comprenant au moins une partie (31) formant rampe sur un secteur angulaire de faible ouverture (A) dont la distance à l'axe varie rapidement entre un minimum et un maximum, un moyen (2, 4, 5, 6) de formation d'impulsions correspondant chacune au passage de la rampe (31) devant le faisceau d'ondes ultra-sonores au cours de la rotation du rotor (14) et des moyens (64, 65) d'enregistrement et de comptage des impulsions se succédant dans l'un ou l'autre sens de rotation du rotor (14).

2. Dispositif de repérage selon la revendication 1, caractérisé par le fait que la distance à l'axe de la surface de réflexion (3) dans le plan radial du faisceau varie linéairement en fonction de l'angle de rotation autour de l'axe, entre le minimum et le maximum, d'une part dans le secteur angulaire (A) correspondant à la rampe (31) et d'autre part sur le reste du profil de la came.

3. Dispositif de repérage selon la revendication 1, caractérisé par le fait que le moyen de formation des impulsions comprend un dispositif (2, 4) de mesure de la durée de propagation des ondes ultra-sonores entre l'émission et la réception de l'écho réfléchi sur le rotor, un dispositif (5) de formation d'un signal par dérivation de la durée de propagation en fonction du temps, un dispositif (6) de comparaison du signal dérivé avec deux seuils positifs (S1, S2) et deux seuils négatifs (S'1, S'2) pour l'élimination dans chaque sens, respectivement, du bruit de fond et des parasites, des moyens (62, 63) de comptage des signaux dérivés successifs compris entre deux seuils de même signe et de formation d'une impulsion positive ou d'une impulsion négative chaque fois que le nombre de signaux successifs de même signe dépasse un nombre donné et des moyens (64, 65) de totalisation, respectivement, desdites impulsions positives et négatives.

4. Dispositif de repérage selon la revendication 1, caractérisé par le fait que la rampe (31) est constituée par une série de marches (32) présentant chacune une face plane de réflexion du faisceau (21) dont la normale est dirigée sensiblement vers l'axe (16) de la tige (12).

**Claims**

1. A device for locating the position of a control rod of a nuclear reactor in which each control rod is suspended from a shaft (12) mounted to slide vertically inside an adaptor tube (10, 11) on which is mounted a screwnut mechanism for controlling the movement of the shaft (12) comprising a rotor (14) forming a nut mounted to rotate around the vertical axis of the tube (10) and equipped with a threaded bore in which a corresponding threaded part (13) of the shaft (12) engages, and a means (15) for driving the rotor (14) in rotation in one direction or the other, the nut (14) being locked in vertical movement and the shaft (12) being locked in rotation, characterized by the fact that it comprises a device (2, 20) which is a transmitter-receiver of a beam of ultrasonic waves (21) in a horizontal direction intersecting the axis (16) of the shaft (12), a wave-reflecting cylindrical surface (3) arranged on the side wall of the rotor having, in its perpendicular cross-section, a cam-shaped profile comprising at least one part (31) forming a slope over a narrow angular sector (A) whose distance from the axis varies rapidly between a minimum and a maximum, a means (2, 4, 5, 6) for producing impulses each of which corresponds to the passage of the slope (31) in front of the beam of ultrasonic waves during the rotation of the rotor (14) and means (64, 65) for recording and counting the successive impulses in one or other direction of rotation of the rotor (14).

2. The locating device as claimed in claim 1, characterized by the fact that the distance between the axis and the reflecting surface (3) measured in the radial plane of the beam varies linearly between the minimum and the maximum as a function of the angle of rotation around the axis, on the one hand in the angular sector (A) corresponding to the slope (31) and on the other hand over the remainder of the cam profile.

3. The locating device as claimed in claim 1, characterized by the fact that the means for producing impulses comprises a device (2, 4) for measuring the duration of propagation of the ultrasonic waves between the transmission and the reception of the echo reflected at the rotor, a device (5) for producing a signal derived from the duration of propagation as a function of time, a device (6) for comparing the derivative signal with two positive thresholds (S1, S2) and two negative thresholds (S'1, S'2) to eliminate, respectively background noise and parasitic noise in both directions, means (62, 63) for counting the successive derivative signals included between two thresholds with the same sign, and for producing a positive impulse or a negative impulse each time the number of successive signals of the same sign exceeds a given number and means (64, 65) for adding, respectively, the said positive and negative impulses.

4. The locating device as claimed in claim 1, characterized by the fact that the slope (31) consists of a series of steps (32) each having a planar beam-reflecting face (21) whose normal is directed substantially towards the axis (16) of the shaft (12).

**Patentansprüche**

1. Vorrichtung zum Lokalisieren der Position eines Steuerstabs eines Kernreaktors, bei dem jeder Steuerstab an einer Stange (12) aufgehangen ist, die vertikal gleitend im Inneren eines Adapterrohres (10, 11) angebracht ist, auf dem ein Schrauben-Mutter-Mechanismus zum Steuern der Verschiebung der Stange (12) angeordnet ist, der einen Rotor (14) aufweist, der eine Mutter bildet, die drehbar um die vertikale Achse des Rohres (10) angeordnet ist und mit einer mit einem Gewinde versehenen Bohrung versehen ist, in der der entsprechende, mit einem Gewinde (13) versehene Teil der Stange (12) eingreift, und ein Drehantriebsorgan (15) des Rotors (14), zum Drehen in die eine oder andere Richtung aufweist, wobei die Mutter (14) bezüglich einer Vertikalverschiebung und die Stange (12) bezüglich einer Drehbewegung blockiert ist, gekennzeichnet durch eine Ultraschall-Sender-Empfänger-Vorrichtung (2, 20), zum Senden bzw. Empfangen eines Strahls von Ultraschallwellen (21) in einer horizontalen Richtung, die die Achse (16) der Stange (12) schneidet, eine zylinderförmige Reflexionsfläche (3) für die Wellen, die auf der Seitenwand des Rotors angebracht ist und im Querschnitt ein gekrümmtes Profil aufweist, mit wenigstens einem Bereich (31), der in einem Kreisausschnitt mit geringer Öffnung (a) eine Rampe bildet, deren Abstand von der Achse stark zwischen einem Minimum und einem Maximum variiert, ein Organ (2, 4, 5, 6) zur Bildung von Impulsen, die jeweils dem Passieren der Rampe (31) vor dem Strahl Ultraschallwellen während der Drehung des Rotors (14) entsprechen und Organe (64, 65) zum Registrieren und Zählen der Impulse, die bei der einen oder anderen Drehrichtung des Rotors (14) aufeinanderfolgen.

2. Vorrichtung nach Anspruch 1, dadurch gekennzeichent, daß der Abstand der Reflexionsfläche (3) in der zum Strahl radialen Ebene zur Achse linear in Abhängigkeit vom Drehwinkel um diese Achse sich ändert zwischen dem Minimum- und dem Maximumwert, einerseits im Winkelsektor (A), der der Rampe (31) entspricht und andererseits im Rest des kurvenförmigen Profils.

3. Vorrichtung nach Anspruch 1, dadurch gekennzeichnet, daß die Mittel zur Bildung von Impulsen einer Vorrichtung (2, 4) zum Messen der Dauer der Fortpflanzung der Ultraschallwellen zwischen dem Absenden und dem Empfangen des am Rotor reflektierten Echos, eine Vorrichtung (5) zur Bildung eines Signals durch Ableiten der Fortpflanzungsdauer in Abhängigkeit von der Zeit, eine Vorrichtung (6) zum Vergleichen des abgeleiteten Signals mit zwei positiven Schwellenwerten (S1, S2) und mit zwei negativen Schwellenwerten (S'1, S'2) zum Eliminieren des Untergrundrauschens und parasitärer Signale in beiden Drehrichtungen, Zählorgane (62, 63) der nacheinander abgeleiteten Signale zwischen zwei Schwellenwerten mit gleichem Vorzeichen und Organe zur Bildung eines positiven Impulses oder eines negativen Impulses, immer dann, wenn die Anzahl der aufeinanderfolgenden Signale mit gleichem Vorzeichen eine bestimmte Anzahl überschreitet und Organe (64, 65) zum Addieren der jeweiligen positiven bzw. negativen Signale aufweist.

4. Vorrichtung nach Anspruch 1, dadurch gekennzeichnet, daß die Rampe (31) aus einer Reihe von Stufen (32) besteht, die jede eine ebene Reflexionsfläche des Strahls (21) bildet, dessen Normale im wesentlichen entlang der Achse (16) der Stange (12) ausgerichtet ist.

Fig 1

Fig 4

Fig 5

Fig 2

Fig 3

Fig 6